# EUROPEAN PATENT SPECIFICATION

(11) **EP 2 569 998 B1**
(45) Date of publication and mention of the grant of the patent: **18.03.2015**
(21) Application number: 10851489.4
(22) Date of filing: 14.05.2010
(51) Int. Cl.: H04W 76/02, H04L 29/06

(54) **Enabling set up of a connection from a non-registered UE in IMS**
Ermöglichung der Einrichtung einer Verbindung von einem nicht registrierten Benutzergerät in IMS
Procédé permettant de configurer une connexion à partir d'un UE non enregistré dans un sous-système IMS

(43) Date of publication of application: 20.03.2013
(73) Proprietor: Telefonaktiebolaget L M Ericsson (PUBL), 164 83 Stockholm (SE)
(72) Inventor: DAHLQVIST, Mattias, SE-117 62 Stockholm (SE); AUSTRELL, Tobias, SE-125 57 Älvsjö (SE)
(74) Representative: Valea AB
(86) International application number: PCT/SE2010/050529
(87) International publication number: WO 2011/142703

(56) References cited:
- EP-A1- 1 903 739
- WO-A2-2007/082134
- US-A1- 2009 089 435
- "Digital cellular telecommunications system (Phase 2+); Universal Mobile Telecommunications System (UMTS); IP Multimedia Subsystem (IMS); Stage 2 (3GPP TS 23.228 version 8.4.0 Release 8); ETSI TS 123 228", IEEE, LIS, SOPHIA ANTIPOLIS CEDEX, FRANCE, vol. 3-SA2, no. V8.4.0, 1 April 2008 (2008-04-01), XP014041651, ISSN: 0000-0001
- 3GPP: "3GPP TS 23.167 V7.0.0 (2006-03) - 3rd Generation Partnership Project; Technical Specification Group Services and System Aspects; IP Multimedia Subsystem (IMS) emergency sessions (Release 7)", INTERNET CITATION, March 2006 (2006-03), XP007903327, Retrieved from the Internet: URL:http://www.3gpp.org/ftp/Specs/html-inf o/23167.htm [retrieved on 2007-10-30]
- MAY EI BARACHI ET AL.: 'Enhancing the QoS and Resource Management Aspects of the 3GPP IMS Emergency Service Architecture' CONSUMER COMMUNICATIONS AND NETWORKING CONFERENCE, 2008. CCNC 2008. 5TH IEEE 2008, PISCATAWAY, NJ, USA, pages 112 - 116, XP031211841
- '3rd Generation Partnership Project; Technical Specification Group Services and System Aspects; IP Multimedia Subsystem (IMS) emergency sessions (Release 8)' 3GPP TS 23.167 V8.5.0 December 2009,

## Description

### TECHNICAL FIELD

The invention relates to a proxy node and a method therein. In particular, the invention relates to enable set up of a connection from a user equipment not registered with an Internet Protocol Multimedia Subsystem.

### BACKGROUND

In today's systems, the reliability to use services in a communications system is of utter importance. Especially, when a priority user such as a Chief in Command or the like need to contact a destination or use a special service. An architectural framework for providing a number of different Internet Protocol Multimedia Services is Internet Protocol Multimedia Subsystem (IMS).

IMS is the technology defined by the Third Generation Partnership Project (3 GPP) to provide IP Multimedia services over packet switched communication networks. IMS provides key features to enrich the end-user person-to-person communication experience through the use of standardised IMS Service Enablers, which facilitate new rich person-to-person, client-to-client, communication services as well as person-to-content, client-to-server services over IP-based networks. The IMS makes use of the Session Initiation Protocol (SIP) to set up and control calls or sessions between user terminals, or user terminals and application servers. The Session Description Protocol (SDP), carried by SIP signalling, is used to describe and negotiate the media components of the session.

Work is ongoing to define priority handling of services for the IMS infrastructure. One priority service that has been mentioned is called Government Emergency Telecommunications Service (GETS) which is a priority service that introduces the possibility to make priority calls from any terminal.

A pre-requisite to originate a call from an IMS network is for the terminal used to initiate the call is registered to a Home Subscriber Server (HSS) of the IMS network. This is a pre-requisite also for priority calls such as a call made according to GETS. This however puts limitations to the service. For example, if there has been an earth-quake, and the communications network is overloaded with both regular calls and emergency calls. A priority user, such as a Chief of Emergency Operation, shall still have possibilities to initiate a call due to higher priority than regular emergency calls. In case there has been a short power-cut either on the terminal side or on the access side, e.g. Proxy Call Session Control Function (P-CSCF) network node, routing/switching equipment, Digital Subscriber Line Access Multiplexer (DSLAM) or the like, the terminals registered with the IMS have lost their association to the IMS network and have been de-registered due to the power-cut. When power is back on and the terminals tries to re-register the registration may fail, since the network is overloaded with terminals performing registrations and calls. Thus, the priority user is unable to perform a call or use other services after the power cut. 3GPP TS 23.167 v7.0.0 (2006-03) section 7.4 discloses handling of an emergency establishment without registration. 3GPP TS 23 228 v8.4.0 (2008-04) section 5.2.2.3 relates to information flow of a user not registered.

### SUMMARY

An object of embodiments herein is to provide a reliable way of setting up a service connection over IMS. The object is achieved by a method and a P-CSCF according to claims 1 and 6.

According to a first aspect of the present solution the object is achieved by providing a method in a proxy node. The proxy node is a P-CSCF network node. The method is for enabling a set up of a service connection from a user equipment to a priority service node, which user equipment is not registered with an Internet Protocol Multimedia Subsystem (IMS). The proxy node is comprised in the IMS and receives a service request from the user equipment. The service request comprises a pattern of characters indicating a priority level of the service request. Additionally, the proxy node determines that the user equipment is not registered with the IMS when the user equipment is not indicated as registered in the proxy node. The proxy node also identifies the service request as a priority service request for a priority service by matching the pattern of characters to a preset priority service pattern of characters. When the service request has been identified as a priority service request and the user equipment has been determined not registered with the IMS, the proxy node simulates setup of a terminating service connection to the priority service node by sending a terminating request to an Interrogating CSCF network node comprised in the IMS. The terminating request comprises an indication of the priority service.

According to a second aspect of the present solution the object is achieved by providing a proxy node for enabling a set up of a service connection from a user equipment to a priority service node. The user equipment is not registered with an IMS and the proxy node is a P-CSCF network node and is comprised in the IMS. The proxy node comprises a receiving circuit configured to receive a service request from the user equipment. The service request comprises a pattern of characters indicating a priority level of the service request. The proxy node further comprises a determining circuit coupled to the receiving circuit and configured to determine that the user equipment is not registered with the IMS when the user equipment is not indicated as registered in the proxy node. In addition, the proxy node comprises an identifying circuit coupled to the receiving circuit. The identifying circuit is configured to identify the service request as a priority service request for a priority service by matching the pattern of characters to a preset priority service pattern of characters. The proxy node comprises a simulating circuit coupled to the determining circuit and the identifying circuit. The simulating circuit is configured to, when the service request has been identified as a priority service request and the user equipment has been determined not registered with the Internet Protocol Multimedia Subsystem, simulate setup of a terminating service connection to the priority service node. The simulating circuit is configured to send a terminating request to an Interrogating CSCF network node comprised in the IMS, which terminating request comprises an indication of the priority service.

The Interrogating CSCF when receiving the terminating request initiates a priority service handling process. Thus, the proposed solution enables a user of a user equipment to set up a service connection over IMS even though the user equipment is not registered with the IMS. Thereby, it is provided a reliable way of setting up the service connection over the IMS using a priority service node without being registered with the IMS. Furthermore, the proposed solution enables the possibility to make priority calls from not registered user equipments without any user equipments impact and minor core impact.

### BRIEF DESCRIPTION OF THE DRAWINGS

Embodiments will now be described in more detail in relation to the enclosed drawings, in which:
- Fig. 1: is a schematic diagram depicting a communications network,
- Fig. 2: is a schematic diagram depicting a communications network,
- Fig. 3: is a combined flowchart and signalling scheme in a communications network,
- Fig. 4: is a schematic flowchart depicting a method in a proxy call session control function network node, and
- Fig. 5: is a schematic block diagram depicting a proxy call session control function network node.

### DETAILED DESCRIPTION

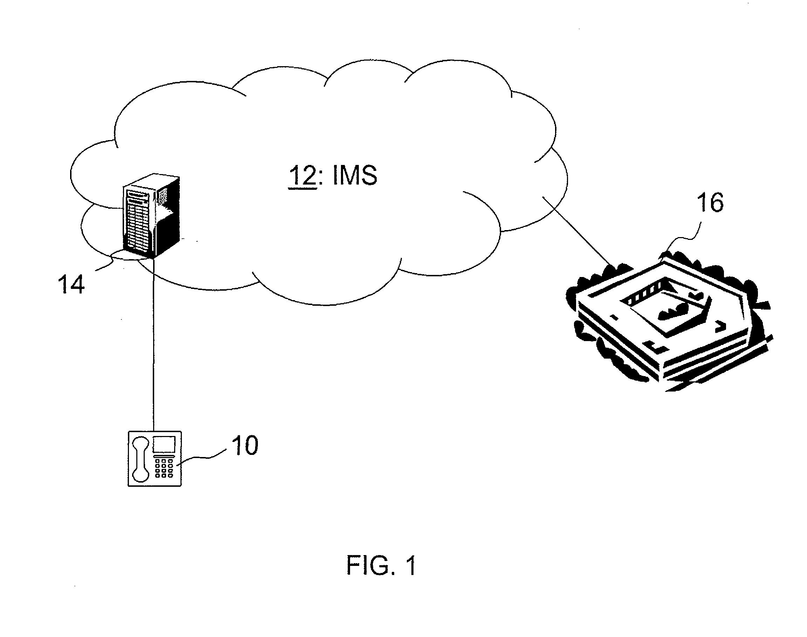

Fig. 1 shows a schematic diagram of a communications network. The communications network may be a Long Term Evolution Network, Wideband Code Division Multiple Access (WCDMA), a Orthogonal Frequency-Division Multiple Access (OFDMA) based network, Digital subscriber Line (XDSL), WiFi, cable or the like and comprises a terminal or user equipment 10 configured to, for example, use Voice over Internet Protocol, VoIP or other Internet Protocol Multimedia Subsystem (IMS) services. The terminal may be a fixed/wireline terminal, e.g. an Integrated Access Device (IAD) or a fixed Session Initiation Protocol (SIP) Phone. A terminal is hereinafter referred to as the user equipment 10. The communications network further comprises **an IMS 12** comprising **a Proxy Call Session Control Function (P-CSCF) network node 14** connecting the user equipment to the IMS 12. The IMS 12 may provide services such as VoIP, Video Sharing or other multimedia services. In order to initiate a service the user equipment 10 needs to be registered with the IMS 12.

In the case there is an emergency and a power cut occurs, for example, during an earth quake or the like, the user equipment 10 is de-registered with the IMS 12. Either the power cut was on the user equipment side rendering in that the connection to the network is broken or on the access side e.g. P-CSCF network node , routing/switching equipment, DSLAM or the like also resulting in that the association between the user equipment 10 and the IMS 12 is deleted.

The solution described herein is a mechanism to increase the possibility for a user of the user equipment 10 to be able to use a priority service even when the network is in an overload situation, e.g. allowing a priority user to make calls from not registered user equipments.

The user needs for example to call another user in **a military headquarter 16** after a natural disaster has occurred wherein the user equipment has lost its registration with the IMS 12. According to the present solution, the user equipment 10 initiates a call set up by sending a service request to use a priority service, such as GETS or similar, to the P-CSCF network node 14. The P-CSCF network node 14 determines that the user equipment 10 is not registered with the IMS 12 and that the call request is a call request for a priority service. The P-CSCF network node 14 then simulates a terminating request for the priority service connecting the user equipment 10 to the priority service server without being registered with the IMS 12. The priority service server, also referred to as the priority service node, then enables the user equipment 10 to call the military headquarter 16.

Priority services, such as GETS, have two ways of handling prioritisation;
- Subscription based prioritising:
   A priority indication is part of the user profile, stored in a Home Subscriber Subsystem (HSS) and downloaded to the S-CSCF network node at registration.
- Non-Subscription based:
   A priority indication is not tied to a specific IMS user but authorization is done in the application layer (PIN validation).

The present solution may be implemented in a GETS system using the Non-Subscription based GETS service. That is, it is mainly intended for non-subscription based GETS service but there are some scenarios for subscription based that may use the present solution.

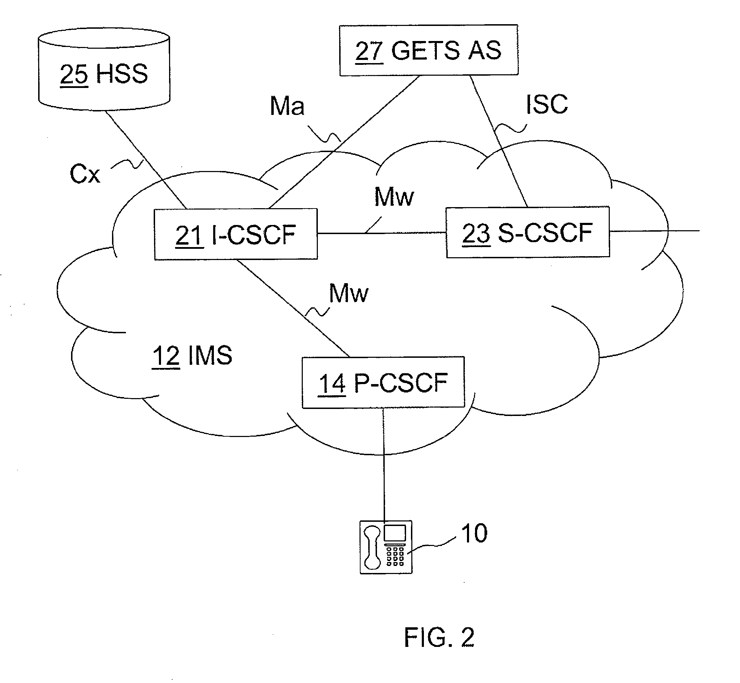

**FIG. 2** shows a more detailed schematic diagram of the IMS architecture 12 and the Call Session Control Function (CSCF) network nodes operating within the IMS and exemplifies a method of using GETS.

There are three types of CSCF network nodes: the Proxy CSCF (P-CSCF) network node 14 which is the first point of contact within the IMS for the user equipment 10; **a Serving CSCF (S-CSCF) network node 23** which provides services to the user equipment 10, which services the user equipment 10 are subscribed to; and an **Interrogating CSCF (I-CSCF) network node 21** arranged to identify the correct S-CSCF and to forward to that S-CSCF network node 23 a request received from the user equipment 10 via the P- CSCF network node 14. The user equipment 10 registers with the IMS 12 using a specified SIP REGISTER method. This is a mechanism for attaching the user equipment 10 to the IMS 12 and announcing to the IMS 12 the address at which the user equipment 10 may be reached. The user equipment 10 receives one or more unique Uniform Resource Identifiers (URI), which are allowed to be used for this particular registration, from the S-CSCF network node 23. When the user equipment 10 performs a registration, the IMS 12 authenticates the user equipment 10, and allocates an S-CSCF network node 23 to the user equipment 10 from the set of available S-CSCF network nodes. It should be noted that the allocation of an S-CSCF network node is used for controlling user access to IMS- based services.

During the registration process, it is the responsibility of the I-CSCF network node 21 to select an S-CSCF network node if one is not already assigned. The I-CSCF network node 21 receives the required S-CSCF capabilities from a home network's **Home Subscriber Server (HSS) 25,** and selects an appropriate S-CSCF network node based on the received capabilities. When the registered user equipment 10 subsequently sends a session request, e.g. SIP INVITE, to the IMS 12, the request may include the P-CSCF URI. The P-CSCF network node 14 is able to forward the request to the S-CSCF network node 23 by adding the address to the S-CSCF network node 23 based on the registration information received from the S-CSCF network node 23 in a registration response. For the terminating call the request will include the P- CSCF URI and a terminating destination node address or indication. The HSS 25 comprises a subscriber database that includes information including, but not limited to, the identity of the registered subscriber, that is the user equipment 10, services and associated policies, location, and authentication data.

Within the IMS 12, application servers (AS) are provided for implementing IMS service functionality. Fig. 2 illustrates **a GETS AS 27** implementing a priority service to the IMS 12. GETS AS 27 provides emergency access and priority processing in a communications network. It is intended to be used in an emergency or crisis situation when the communications network is congested and the probability of completing a call over normal or other alternate telecommunication means has significantly decreased.

A priority call is made towards dedicated numbers indicating a priority service such as GETS or similar. The call is routed to the GETS AS 27 which is authorizing the user of the user equipment 10 by requesting a PIN validation, and after validation the user of the user equipment 10 is prompted to enter a destination number. In the normal case, when the identity of the user equipment 10 used is registered, the call will be routed via P-CSCF network node 14 to the S-CSCF network node 23 and then to GETS AS 27. If the user equipment 10 is not registered, the call will be rejected at the P-CSCF network node 14.

However, according to the present solution, a mechanism is provided in the P-CSCF network node 14, which may in the case of priority call from a not registered user equipment is detected, simulate a "terminating" request and send the request to the I-CSCF network node 21. The I-CSCF network node 21 will see this as a call in a terminating domain and query HSS 25 for the terminating user, defined by a request URI in the terminating request. In this case the request URI will match a Public Service Identifier (PSI) pointing to the GETS AS 27 which will perform the authorization.

A terminating request is a request approaching the terminating side or domain from an originating side or domain of a connection setup in which the receiver of the terminating request, such as a terminating user equipment or service, in question belongs. The terminating side, beginning with the I-CSCF network node 21 does not require any security mechanisms as long as the request comes from a trusted entity, which trusted source means that no new requirements around security is needed. As the request is a terminating request the source is considered trusted. The terminating side also provides the possibility to invoke Public Service Identities (PSI). The terminating request also comprises information from where the terminating request is coming from.

In Fig. 2 the interfaces between the network nodes are illustrated;
**Ma** is defined as an interface between the I-CSCF network node 21 and the GETS AS 27 and may be used to directly forward SIP requests which are destined to a Public Service Identity hosted by the GETS AS 27;
**Mw** is defined as interfaces between the different CSCF network nodes used to exchange data between the different CSCF network nodes;
**ISC** is defined as an interface between the S-CSCF network node 23 and the GETS AS 27 and may be used to exchange data between the S-CSCF network node 23 and the GETS AS 27; and
Cx is defined as an interface between the HSS 25 and the I-CSCF network node 21 and may be used to exchange data between the HSS 25 and the I-CSCF network node 21.

The I-CSCF network node 21 may use the Ma-Interface and route the call directly to the GETS AS 27 which will authorize the user of the user equipment 10 and make an Out Of The Blue (OOTB) request to the "real" destination. It is also possible to route the call via the S-CSCF network node 23, that is, I-CSCF network node 21 to S-CSCF network node 23 over Mw-interface and further to GETS AS 27 over ISC. Out of the blue is for example when a service AS is initiating a request, i.e. it does not originate from a specific user equipment. So from the IMS point of view the origination is "out of the blue".

In the illustrated example the AS is exemplified as a GETS AS 27. However, the solution is also applicable to other application servers for providing a priority service.

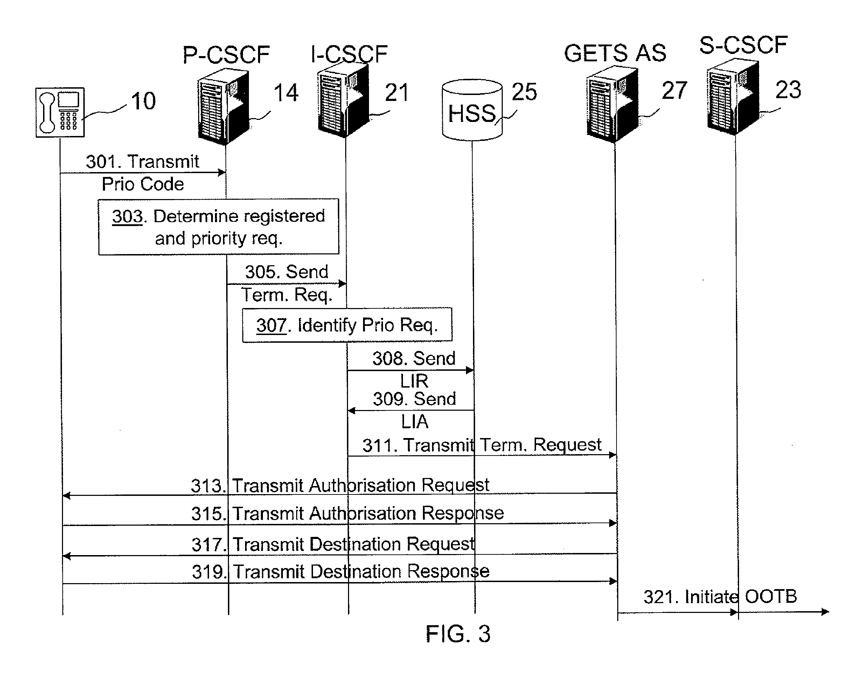

**FIG. 3** is a combined schematic flowchart and signalling scheme in the communications network. A user wants to make a priority call to a terminating user.

**Step 301.** The user equipment 10 transmits a service request, such as a priority code or a similar pattern of characters entered by a user, to the P-CSCF network node 14. The service request is indicating a priority level of the service request i.e. this is a priority call and perhaps also priority service type. The level may be binary, i.e. priority service or not, or may comprise more than two levels.

For example, the user equipment 10 sends a service request such as an INVITE sip:7106274387@ims.com;user=phone.

**Step 303.** The P-CSCF network node 14 determines that the user equipment 10 is not registered with the IMS 12 and identifies the service request as a priority service request.

The P-CSCF network node 14 may determine that the user equipment 10 is not registered based on an originating Internet Protocol (IP) address of the user equipment 10. Furthermore, The P-CSCF network node 14 may determine that the user equipment 10 is not registered when an association between an IMS identity and an identity of the user equipment 10 is lacking in the P-CSCF network node 14.

The P-CSCF network node 14 may identify the service request as a priority service request by matching a pattern of characters, numerical or alphabetical, of the call request to a preset pattern of characters. The pattern of characters may be represented by a request Uniform Resource Identifier from the user equipment or a priority code. For example, in GETS there exists a plurality of numbers indicating a priority call request, such as:
GETS-Access Number (AN), which is a North American Numbering Plan (NANP) number designated for invoking GETS with Service User authentication, e.g. using a Personal Identification Number (PIN), and a separately indicated Directory Number (DN) for the called party. In Legacy GETS, the GETS-ANs are 710-NCS-GETS i.e, translated to the toll number 710-627-4387, and specific 8YY-NXX-XXXX toll-free numbers. These GETS-ANs also apply to Next Generation Network (NGN) GETS Voice service.

GETS-Pseudo Destination Number (PDN), which is a NANP number with a 711 Numbering Plan Area (NPA) which is only valid for use as the DN for the called party in a call/session invoked using GETS-AN. The GETS-PDNs are 711-NXX-XXXX numbers. Note that both GETS-Number Translations (NT) and GETS PDNs can be used as the DN in a GETS-AN invoked call/session. GETS-NTs can be used to originate a GETS call/session; GETS-PDNs cannot be used to originate a GETS call/session. These GETS-NTs and GETS-PDNs also apply to NGN GETS Voice service. It should be noted that a GETS-PDN can only be used as a DN in a GETS-AN invocation.

GETS-Feature Code (FC), which is a feature code preceding a DN, such as a prefix, that is designated to invoke GETS using subscription-based authentication. In Wireless Priority Service (WPS), the GETS-FC is *272. This GETS-FC also applies to NGN GETS Voice service.

GETS-NT (Number Translation), which is a NANP number, designated for invoking GETS with or, in some special circumstances, without Service User authentication, e.g., PIN authentication, which subsequently is translated into a NANP DN to meet an National Security and Emergency Preparedness (NS/EP) requirement for anonymity. In Legacy GETS, the GETS-NTs are any 710-NXX-XXXX numbers other than 710- NCS-GETS.

**Step 305.** The P-CSCF network node 14 simulates a setup of a terminating service connection to the priority service node 27. This is performed by sending a terminating request to the I-CSCF network node 21. The terminating request comprises an indication that the request regards a priority service. The terminating request may be indicated as originating from the user equipment 10.

As an example, the P-CSCF network node 14 is configured to allow GETS calls from not registered users and to match an incoming request URI with a list of valid GETS numbers. The P-CSCF network node 14 then adds a priority indication in a Resource Priority Header (RPH) of a terminating request and sends the terminating request to a predefined I-CSCF network node. The terminating request may be a SIP request forwarded from the user equipment 10.

**Step 307.** The I-CSCF network node 21 identifies the terminating request as a priority service request by the presence of RPH in the terminating request and initiates priority service handling, see steps 308-310.

**Step 308.** The I-CSCF network node 21 sends a Location Information Request (LIR) over the Cx interface to the HSS 25 comprising the priority code or pattern of characters. For example, a LIR is sent to the HSS 25 comprising the GETS number +7106274387 from the SIP INVITE.

**Step 309.** The HSS 25 answers the LIR by sending back a Location Information Answer (LIA) to the I-CSCF network node 21. The LIA comprises a server name or address for example, the GETS AS 27 Fully Qualified Domain Name (FQDN). The server name may be defined as a SIP URI and the I-CSCF network node 21 may perform direct routing over Ma to the GETS AS 27. The I-CSCF network node 21 may also route via S-CSCF network node 23, and then the S-CSCF network node 23 may use Initial Filter Criteria (IFC). IFC may be used to instruct the S-CSCF network node 23 in terms of SIP message routing to a certain AS and the S-CSCF network node 23 may then download the Service Profile which will include an IP Multimedia Public Identity (IMPU) with a Public Service Identity (PSI) marking, and the IFC evaluation will point to the GETS AS 27.

**Step 311.** The I-CSCF network node 21 thus retrieves the GETS AS address in the LIA from the HSS 25 comprising the address for the GETS AS 27 and transmits the terminating request over the Ma interface to the GETS AS 27 requesting the priority service. That is, the I-CSCF network node 21 acts as a SIP proxy forwarding the terminating request to the GETS AS 27.

**Step 313.** The GETS AS 27 transmits an authorisation request to the user equipment 10 identified in the terminating request. For example, the authorisation request may comprise an Interactive Voice Response prompting the user of the user equipment 10 to enter a Personal Identification Number (PIN) or the like, to authorise the user to use the priority service.

**Step 315.** The user equipment 10 then transmits an authorisation response such as a PIN code or the like to the GETS AS 27 that has been entered by the user.

**Step 317.** The GETS AS 27 matches the received PIN code with stored PIN code and, if a successful match is found, transmits a destination request for a destination number to the user equipment 10 thereby prompting the user of the user equipment 10 to enter a destination number.

**Step 319.** The user equipment 10 transmits a destination response to the GETS AS 27. The destination response may be defined as a Dual-tone multi-frequency (DTMF) number entered by the user or similar.

**Step 321.** The GETS AS 27 then collects the destination number from the destination response and initiates an Out of the Blue (OOTB) connection to the destination over ISC or Ma.

Thus, a connection is setup to a destination user, or service, using a priority service without the originating user equipment 10 being registered with the IMS.

The priority service in the illustrated example is GETS. However, this solution may be applicable to any priority service.

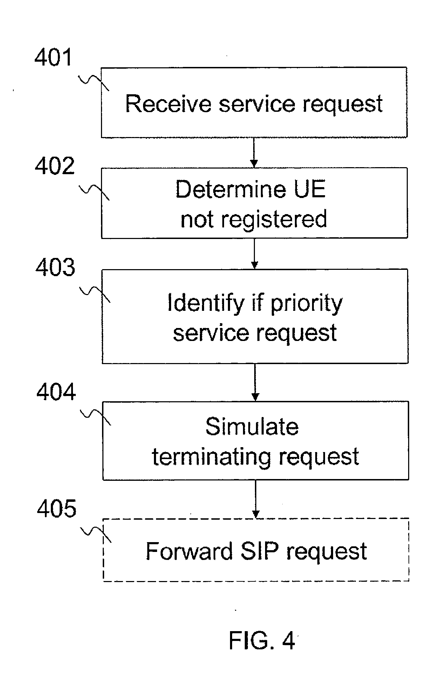

The method steps in a Proxy node, referred to as P-CSCF network node 14 in the previous figures, for enabling a set up of a service connection from a user equipment 10 to a service node 27 according to some embodiments will now be described with reference to a flowchart depicted in Fig. 4. The user equipment 10 is not registered with an Internet Protocol Multimedia Subsystem 12. The steps do not have to be taken in the order stated below, but may be taken in any suitable order. The P-CSCF network node 14 is comprised in the Internet Protocol Multimedia Subsystem 12 and may also be referred as the proxy node 14.

**Step 401.** The P-CSCF network node 14 receives a service request from the user equipment 10. The service request comprises a pattern of characters indicating a priority level of the service request. The user equipment may send a GETS sip or the like.

**Step 402.** The P-CSCF network node 14 determines that the user equipment 10 is not registered with the Internet Protocol Multimedia Subsystem 12 when the user equipment 10 is not indicated as registered in the proxy node 14. This may be based on originating Internet Protocol address of the user equipment 10.

For example, in the P-CSCF network node 14 there may be stored indications of user equipments that are registered with the IMS 12. An indication comprises an association between an IMS identity, such as IP Multimedia Public Identity (IMPU), and an identity of the user equipment 10. This association is then used for all SIP transactions for this particular registration as long as the registration is valid. IMPU may be digits, for example, a telephone Uniform Request Identity (URI) like tel:+1-555-123-4567, or an alphanumeric identifiers for example, a SIP- Uniform Request Identity like sip:name@domain.com. If the P-CSCF network node 14 determines that such an association for the requesting user equipment 10 is not stored in the P-CSCF network node 14, the user equipment 10 is determined not to be registered with the IMS 12. Thus, the determining step may comprise to determine that an association between an Internet Protocol Multimedia Subsystem identity and an identity of the user equipment 10 is lacking in the P-CSCF network node 14.

**Step 403.** The P-CSCF network node 14 identifies the service request as a priority service request for a priority service by matching the pattern of characters to a preset priority service pattern of characters. The P-CSCF network node 14 may comprise a list of preset priority service patterns of characters comprising priority service numbers such as GETS numbers and/or prefix numbers. The pattern of characters, that is, letters and/or digits, may be represented by a request Uniform Resource Identifier from the user equipment 10.

**Step 404.** When the service request has been identified as a priority service request and the user equipment 10 has been determined not registered with the Internet Protocol Multimedia Subsystem 12, the P-CSCF network node 14 simulates setup of a terminating service connection to the priority service node 27. The simulation is performed by sending a terminating request to an Interrogating call session control function network node 21 comprised in the Internet Protocol Multimedia Subsystem 12. The terminating request comprises an indication of the priority service and may also indicate the originating user equipment URI or the like. The indication of the priority service may comprise a Resource Priority Header, thereby indicating that the terminating request concerns the priority service.

**Step 405.** The P-CSCF network node 14 forwards a session initiation protocol request to the priority service node 27 via the I-CSCF network node 21 when authorisation from the user equipment 10 to the priority service node 27 has been successful. For example, forwards a SIP request for the desired service, to the priority service node 27 for session handling and dialogue establishment. The SIP request may be forwarded over an interface between the I-CSCF network node 21 and the priority service node 27 or via the S-CSCF network node 23 to the priority service node 27.

It should be noted that the user equipment 10 may be represented by a wired terminal.

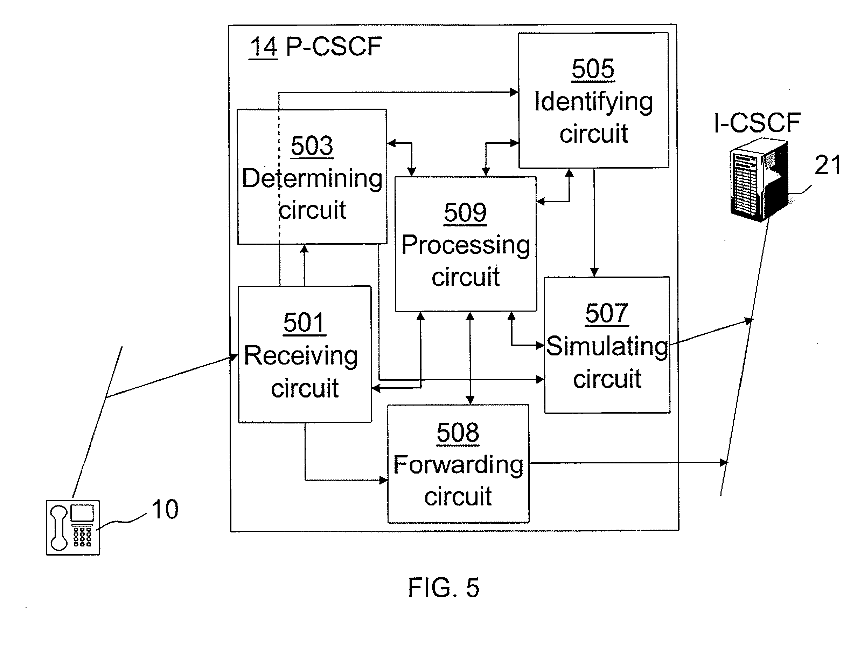

In order to perform the method for enabling the set up of the service connection from the user equipment 10 to the priority service node 27 a proxy node 14 is provided. **Fig. 5** is a schematic block diagram depicting the proxy node 14. The proxy node 14 is, as stated above, configured to be comprised in an IMS network and is a P-CSCF network node 14. The user equipment 10 is not registered with an Internet Protocol Multimedia Subsystem 12.

The P-CSCF network node 14 comprises a receiving circuit 501 configured to receive a service request from the user equipment (10), which service request comprises a pattern of characters indicating a priority level of the service request. In addition, the P-CSCF network node 14 comprises **a determining circuit 503** coupled to the receiving circuit 501 and configured to determine that the user equipment 10 is not registered with the Internet Protocol Multimedia Subsystem 12 when the user equipment (10) is not indicated as registered in the proxy node 14. The P-CSCF network node 14 further comprises **an identifying circuit 505** coupled to the receiving circuit 501 and configured to identify the service request as a priority service request for a priority service by matching the pattern of characters to a preset priority service pattern of characters. Furthermore, the P-CSCF network node 14 comprises **a simulating circuit 507** coupled to the determining circuit 503 and the identifying circuit 505 and configured to, when the service request has been identified as a priority service request and the user equipment 10 has been determined not registered with the IMS 12, simulate setup of a terminating service connection to the priority service node 27. The simulation is performed in that the simulating circuit 507 is configured to send a terminating request to an I-CSCF network node 21 comprised in the Internet Protocol Multimedia Subsystem 12. The terminating request comprises an indication of the priority service.

The indication of the priority service in the terminating request may be comprised in a Resource Priority Header. Also, the indication may indicate the priority and the service identity, that is, the indication may indicate different priority services.

The proxy node may be configured to comprise a list of preset priority service patterns of characters comprising priority service numbers. The user equipment 10 may be represented by a wired terminal.

The proxy node 14 may also comprise **a forwarding circuit 508** configured to forward a session initiation protocol request to the priority service node 27 via the Interrogating call session control function network node 21 when authorisation to the priority service node 27 from the user equipment 10 has been successful.

The present mechanism for enabling a set up of a service connection from the user equipment 10 to the priority service node 27 may be implemented through one or more processors, such as **a processing circuit 509** in the P-CSCF network node 14 depicted in Fig. 5, together with computer program code for performing the functions of the present solution. The program code mentioned above may also be provided as a computer program product, for instance in the form of a data carrier carrying computer program code for performing the present solution when being loaded into the P-CSCF network node 14. One such carrier may be in the form of a CD ROM disc. It is however feasible with other data carriers such as a memory stick. The computer program code may furthermore be provided as pure program code on a server and downloaded to the P-CSCF network node 14.

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation, the scope of the invention being defined by the following claims.

## Claims

1. A method in a proxy node (14) for enabling a set up of a service connection from a user equipment (10) to a priority service node (27), which user equipment (10) is not registered with an Internet Protocol Multimedia Subsystem (12), and which proxy node (14) is a proxy call session control function network node and is comprised in the Internet Protocol Multimedia Subsystem (12); the method comprising,
- *receiving* (401) a service request from the user equipment (10), which service request comprises a pattern of characters indicating a priority level of the service request,
- *determining* (402) that the user equipment (10) is not registered with the Internet Protocol Multimedia Subsystem (12) when the user equipment (10) is not indicated as registered in the proxy node (14),
- *identifying* (403) the service request as a priority service request for a priority service by matching the pattern of characters to a preset priority service pattern of characters,
and **characterized in that** :
- when the service request has been identified as a priority service request and the user equipment (10) has been determined not registered with the Internet Protocol Multimedia Subsystem (12), *simulating* (404) setup of a terminating service connection to the priority service node (27) by sending a terminating request to an Interrogating call session control function network node (21) comprised in the Internet Protocol Multimedia Subsystem (12), which terminating request comprises an indication of the priority service enabling the Interrogating call session control function network node (21) to identify the terminating request as a priority service request by the presence of the indication of the priority service in the terminating request and to initiate priority service handling.

2. A method according to claim 1, wherein the indication of the priority service in the terminating request is comprised in a Resource Priority Header.

3. A method according to any of the claims 1-2, wherein the proxy node (14) comprises a list of preset priority service patterns of characters comprising priority service numbers.

4. A method according to any of the claims 1-3, wherein the user equipment is represented by a wired terminal.

5. A method according to any of the claims 1-4, further comprising
- *forwarding* (405) a session initiation protocol request to the priority service node (27) via the Interrogating call session control function network node (21) when authorisation from the user equipment (10) to the priority service node (27) has been successful.

6. A proxy node (14) for enabling a set up of a service connection from a user equipment (10) to a priority service node (27), which user equipment (10) is not registered with an Internet Protocol Multimedia Subsystem (12), and which proxy node (14) is a proxy call session control function network node and is comprised in the Internet Protocol Multimedia Subsystem (12); the proxy node (14) comprises,
a receiving circuit (501) configured to receive a service request from the user equipment (10), which service request comprises a pattern of characters indicating a priority level of the service request,
a determining circuit (503) coupled to the receiving circuit (501) and configured to determine that the user equipment (10) is not registered with the Internet Protocol Multimedia Subsystem (12) when the user equipment (10) is not indicated as registered in the proxy node (14),
an identifying circuit (505) coupled to the receiving circuit (501) and configured to identify the service request as a priority service request for a priority service by matching the pattern of characters to a preset priority service pattern of characters,
and is **characterized in that** :
a simulating circuit (507) coupled to the determining circuit (503) and the identifying circuit (505) and configured to, when the service request has been identified as a priority service request and the user equipment (10) has been determined not registered with the Internet Protocol Multimedia Subsystem, simulates setup of a terminating service connection to the priority service node (27) by being configured to send a terminating request to an Interrogating call session control function network node (21) comprised in the Internet Protocol Multimedia Subsystem (12), which terminating request comprises an indication of the priority service enabling the Interrogating call session control function network node (21) to identify the terminating request as a priority service request by the presence of the indication of the priority service in the terminating request and to initiate priority service handling.

7. A proxy node (14) according to claim 6, wherein the indication of the priority service in the terminating request is comprised in a Resource Priority Header.

8. A proxy node (14) according to any of the claims 6-7, wherein the proxy node (14) is configured to comprise a list of preset priority service patterns of characters comprising priority service numbers.

9. A proxy node (14) according to any of the claims 6-8, wherein the user equipment (10) is represented by a wired terminal.

10. A proxy node (14) according to any of the claims 6-9, further comprising
a forwarding circuit (508) configured to forward a session initiation protocol request to the priority service node (27) via the Interrogating call session control function network node (21) when authorisation from the user equipment (10) to the priority service node (27) has been successful.

## Patentansprüche

1. Verfahren in einem Proxyknoten (14) zur Ermöglichung einer Einrichtung einer Dienstverbindung von einem Benutzergerät (10) mit einem Prioritätsdienstknoten (27), wobei das Benutzergerät (10) nicht mit einem Internet-Protokoll-Multimedia-Subsystem (12) verbunden ist und wobei der Proxyknoten (14) ein Proxyanruf-Sitzungssteuerungs-Funktionsnetzwerkknoten ist und in dem Internet-Protokoll-Multimedia-Subsystem (12) enthalten ist; wobei das Verfahren umfasst,
- *Empfangen* (401) einer Dienstanfrage von dem Benutzergerät (10), wobei die Dienstanfrage ein Muster von Zeichen umfasst, das einen Prioritätspegel der Dienstanfrage anzeigt,
- *Bestimmen* (402), dass das Benutzergerät (10) nicht mit dem Internet-Protokoll-Multimedia-Subsystem (12) registriert ist, wenn das Benutzergerät (10) nicht als in dem Proxyknoten (14) registriert angezeigt wird,
- *Identifizieren* (403) der Dienstanfrage als Prioritätsdienstanfrage für einen Prioritätsdienst durch Vergleichen des Musters von Zeichen mit einem voreingestellten Prioritätsdienstmuster von Zeichen,
und **dadurch gekennzeichnet, dass**
wenn die Dienstanfrage als eine Prioritätsdienstanfrage identifiziert wurde und das Benutzergerät (10) bestimmt wurde, nicht mit dem Internet-Protokoll-Multimedia-Subsystem (12) registriert zu sein, Simulieren (404) einer Einrichtung einer Beendigungsdienstverbindung mit dem Prioritätsdienstknoten (27) durch Senden einer Beendigungsanfrage an einen in dem Internet-Protokoll-Multimedia-Subsystem (12) enthaltenen Nachfrage-Anrufsitzungssteuerfunktion-Netzwerkknoten (21), wobei die Beendigungsanfrage eine Anzeige des Prioritätsdienstes umfasst, die es dem Nachfrage-Anrufsitzungssteuerfunktion-Netzwerkknoten (21) ermöglicht, die Beendigungsanfrage als eine Prioritätsdienstanfrage durch die Anwesenheit der Anzeige des Prioritätsdienstes in der Beendigungsanfrage zu identifizieren und eine Prioritätsdiensthandhabung zu initiieren.

2. Verfahren nach Anspruch 1, wobei die Anzeige des Prioritätsdienstes in der Beendigungsanfrage in einem Ressourcen-Prioritäts-Header enthalten ist.

3. Verfahren nach einem der Ansprüche 1-2, wobei der Proxyknoten (14) eine Liste von voreingestellten Prioritätsdienstmuster von Zeichen, umfassend Prioritätsdienstnummern, umfasst.

4. Verfahren nach einem der Ansprüche 1-3, wobei das Benutzergerät durch ein verdrahtetes Endgerät dargestellt wird.

5. Verfahren nach einem der Ansprüche 1-4, weiterhin umfassend
- *Weiterleiten* (405) einer Sitzung-Initiierung-Protokoll-Anfrage an den Prioritätsdienstknoten (27) über den Nachfrage-Anrufsitzungssteuerfunktion-Netzwerkknoten (21), wenn eine Autorisierung von dem Benutzergerät (10) zu dem Prioritätsdienstknoten (27) erfolgreich war.

6. Ein Proxyknoten (14) zum Ermöglichen einer Einrichtung einer Dienstverbindung von einem Benutzergerät (10) zu einem Proxydienstknoten (27), wobei das Benutzergerät (10) nicht mit einem Internet-Protokoll-Multimedia-Subsystem (12) registriert ist und wobei der Proxyknoten (14) ein Proxyanruf-Sitzungssteuerungs-Funktionsnetzwerkknoten ist und in dem Internet-Protokoll-Multimedia-Subsystem (12) enthalten ist, wobei der Proxyknoten (14) umfasst,
eine Empfangsschaltung (501), die eingerichtet ist zum Empfangen einer Dienstanfrage von dem Benutzergerät (10), wobei die Dienstanfrage ein Muster von Zeichen umfasst, das einen Prioritätspegel der Dienstanfrage anzeigt,
eine Bestimmungsschaltung (503), die mit der Empfangsschaltung (501) gekoppelt ist und die eingerichtet ist zum Bestimmen, dass das Benutzergerät (10) nicht mit dem Internet-Protokoll-Multimedia-Subsystem (12) registriert ist, wenn das Benutzergerät (10) nicht als in dem Proxyknoten (14) registriert angezeigt wird,
eine Identifizierungsschaltung (505), die mit der Empfangsschaltung (501) gekoppelt ist und die eingerichtet ist zum Identifizieren der Dienstanfrage als Prioritätsdienstanfrage für einen Prioritätsdienst durch Vergleichen des Musters von Zeichen mit einem voreingestellten Prioritätsdienstmuster von Zeichen,
und **gekennzeichnet durch**
eine Simulationsschaltung (507), die mit der Bestimmungsschaltung (503) und der Identifizierungsschaltung (505) gekoppelt ist und die eingerichtet ist, wenn die Dienstanfrage als eine Prioritätsdienstanfrage identifiziert wurde und das Benutzergerät (10) bestimmt wurde, nicht mit dem Internet-Protokoll-Multimedia-Subsystem (12) registriert zu sein, zum Simulieren einer Einrichtung einer Beendigungsdienstverbindung mit dem Prioritätsdienstknoten (27) **dadurch**, dass sie eingerichtet ist zum Senden einer Beendigungsanfrage an einen in dem Internet-Protokoll-Multimedia-Subsystem (12) enthaltenen Nachfrage-Anrufsitzungssteuerfunktion-Netzwerkknoten (21), wobei die Beendigungsanfrage eine Anzeige des Prioritätsdienstes umfasst, die es dem Nachfrage-Anrufsitzungssteuerfunktion-Netzwerkknoten (21) ermöglicht, die Beendigungsanfrage als eine Prioritätsdienstanfrage **durch** die Anwesenheit der Anzeige des Prioritätsdienstes in der Beendigungsanfrage zu identifizieren und eine Prioritätsdiensthandhabung zu initiieren.

7. Proxyknoten (14) nach Anspruch 6, wobei die Anzeige des Prioritätsdienstes in der Beendigungsanfrage in einem Ressourcen-Prioritäts-Header enthalten ist.

8. Proxyknoten (14) nach einem der Ansprüche 6-7, wobei der Proxyknoten (14) eingerichtet ist, eine Liste von voreingestellten Prioritätsdienstmuster von Zeichen, umfassend Prioritätsdienstnummern, zu umfassen.

9. Proxyknoten (14) nach einem der Ansprüche 6-8, wobei das Benutzergerät (10) durch ein verdrahtetes Endgerät dargestellt wird.

10. Proxyknoten (14) nach einem der Ansprüche 6-9, weiterhin umfassend
eine Weiterleitungsschaltung (508), die eingerichtet ist zum Weiterleiten einer Sitzung-Initiierung-Protokoll-Anfrage an den Prioritätsdienstknoten (27) über den Nachfrage-Anrufsitzungssteuerfunktion-Netzwerkknoten (21), wenn eine Autorisierung von dem Benutzergerät (10) zu dem Prioritätsdienstknoten (27) erfolgreich war.

## Revendications

1. Procédé dans un noeud mandataire (14) pour permettre un établissement d'une connexion de service d'un équipement d'utilisateur (10) à un noeud de service prioritaire (27), lequel équipement d'utilisateur (10) n'est pas enregistré auprès d'un Sous-système Multimédia de Protocole Internet (12), et lequel noeud mandataire (14) est un noeud de réseau de fonction de contrôle de session d'appel mandataire et est compris dans le Sous-système Multimédia de Protocole Internet (12) ; le procédé comprenant,
- la réception (401) d'une demande de service en provenance de l'équipement d'utilisateur (10), laquelle demande de service comprend un motif de caractères indiquant un niveau de priorité de la demande de service,
- la détermination (402) que l'équipement d'utilisateur (10) n'est pas enregistré auprès du Sous-système Multimédia de Protocole Internet (12) lorsque l'équipement d'utilisateur (10) n'est pas indiqué comme enregistré dans le noeud mandataire (14),
- l'identification (403) de la demande de service comme une demande de service prioritaire pour un service prioritaire en mettant en correspondance le motif de caractères avec un motif de caractères de service prioritaire préétabli,
et **caractérisé en ce que** :
- lorsque la demande de service a été identifiée comme une demande de service prioritaire et que l'équipement d'utilisateur (10) a été déterminé comme n'étant pas enregistré auprès du Sous-système Multimédia de Protocole Internet (12), la simulation (404) de l'établissement d'une connexion de service de terminaison au noeud de service prioritaire (27) en envoyant une demande de terminaison à un noeud de réseau de fonction de contrôle de session d'appel Interrogateur (21) compris dans le Sous-système Multimédia de Protocole Internet (12), laquelle demande de terminaison comprend une indication du service prioritaire permettant au noeud de réseau de fonction de contrôle de session d'appel Interrogateur (21) d'identifier la demande de terminaison comme une demande de service prioritaire par la présence de l'indication du service prioritaire dans la demande de terminaison et d'initier la prise en charge de service prioritaire.

2. Procédé selon la revendication 1, dans lequel l'indication du service prioritaire dans la demande de terminaison est comprise dans un En-tête de Priorité de Ressource.

3. Procédé selon l'une quelconque des revendications 1 à 2, dans lequel le noeud mandataire (14) comprend une liste de motifs de caractères de service prioritaire préétablis comprenant des numéros de service prioritaire.

4. Procédé selon l'une quelconque des revendications 1 à 3, dans lequel l'équipement d'utilisateur est représenté par un terminal filaire.

5. Procédé selon l'une quelconque des revendications 1 à 4, comprenant en outre
- le transfert (405) d'une demande de protocole d'initiation de session au noeud de service prioritaire (27) via le noeud de réseau de fonction de contrôle de session d'appel Interrogateur (21) lorsque l'autorisation de l'équipement d'utilisateur (10) au noeud de service prioritaire (27) a été réussie.

6. Noeud mandataire (14) pour permettre un établissement d'une connexion de service d'un équipement d'utilisateur (10) à un noeud de service prioritaire (27), lequel équipement d'utilisateur (10) n'est pas enregistré auprès d'un Sous-système Multimédia de Protocole Internet (12), et lequel noeud mandataire (14) est un noeud de réseau de fonction de contrôle de session d'appel mandataire et est compris dans le Sous-système Multimédia de Protocole Internet (12) ; le noeud mandataire (14) comprend,
un circuit de réception (501) configuré pour recevoir une demande de service en provenance de l'équipement d'utilisateur (10), laquelle demande de service comprend un motif de caractères indiquant un niveau de priorité de la demande de service,
un circuit de détermination (503) couplé au circuit de réception (501) et configuré pour déterminer que l'équipement d'utilisateur (10) n'est pas enregistré auprès du Sous-système Multimédia de Protocole Internet (12) lorsque l'équipement d'utilisateur (10) n'est pas indiqué comme enregistré dans le noeud mandataire (14),
un circuit d'identification (505) couplé au circuit de réception (501) et configuré pour identifier la demande de service comme une demande de service prioritaire pour un service prioritaire en mettant en correspondance le motif de caractères avec un motif de caractères de service prioritaire préétabli,
et **caractérisé en ce que** :
un circuit de simulation (507) couplé au circuit de détermination (503) et au circuit d'identification (505) et configuré pour, lorsque la demande de service a été identifiée comme une demande de service prioritaire et que l'équipement d'utilisateur (10) a été déterminé comme n'étant pas enregistré auprès du Sous-système Multimédia de Protocole Internet, simuler l'établissement d'une connexion de service de terminaison au noeud de service prioritaire (27) en étant configuré pour envoyer une demande de terminaison à un noeud de réseau de fonction de contrôle de session d'appel Interrogateur (21) compris dans le Sous-système Multimédia de Protocole Internet (12), laquelle demande de terminaison comprend une indication du service prioritaire permettant au noeud de réseau de fonction de contrôle de session d'appel Interrogateur (21) d'identifier la demande de terminaison comme une demande de service prioritaire par la présence de l'indication du service prioritaire dans la demande de terminaison et d'initier la prise en charge de service prioritaire.

7. Noeud mandataire (14) selon la revendication 6, dans lequel l'indication du service prioritaire dans la demande de terminaison est comprise dans un En-tête de Priorité de Ressource.

8. Noeud mandataire (14) selon l'une quelconque des revendications 6 à 7, dans lequel le noeud mandataire (14) est configuré pour comprendre une liste de motifs de caractères de service prioritaire préétablis comprenant des numéros de service prioritaire.

9. Noeud mandataire (14) selon l'une quelconque des revendications 6 à 8, dans lequel l'équipement d'utilisateur (10) est représenté par un terminal filaire.

10. Noeud mandataire (14) selon l'une quelconque des revendications 6 à 9, comprenant en outre
un circuit de transfert (508) configuré pour transférer une demande de protocole d'initiation de session au noeud de service prioritaire (27) via le noeud de réseau de fonction de contrôle de session d'appel Interrogateur (21) lorsque l'autorisation de l'équipement d'utilisateur (10) au noeud de service prioritaire (27) a été réussie.
